(19) Europäisches Patentamt
European Patent Office
Office européen des brevets

(11) **EP 4 190 852 A1**

(12) **EUROPEAN PATENT APPLICATION**
published in accordance with Art. 153(4) EPC

(43) Date of publication:
**07.06.2023 Bulletin 2023/23**

(21) Application number: **21849747.7**

(22) Date of filing: **20.07.2021**

(51) International Patent Classification (IPC):
*C08K 5/20* (2006.01)    *C08L 23/08* (2006.01)
*C08L 23/14* (2006.01)    *C08K 3/013* (2018.01)
*C08K 3/04* (2006.01)

(52) Cooperative Patent Classification (CPC):
**C08K 3/013; C08K 3/04; C08K 5/20; C08L 23/08;**
**C08L 23/14**

(86) International application number:
**PCT/JP2021/027110**

(87) International publication number:
**WO 2022/024869 (03.02.2022 Gazette 2022/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.07.2020  JP 2020128140**

(71) Applicant: **SUMITOMO CHEMICAL COMPANY,**
**LIMITED**
**Tokyo 103-6020 (JP)**

(72) Inventors:
• **SATO, Hiroki**
  **Ichihara-shi, Chiba 299-0195 (JP)**
• **MARUYAMA, Takeshi**
  **Ichihara-shi, Chiba 299-0195 (JP)**

(74) Representative: **Vossius & Partner**
**Patentanwälte Rechtsanwälte mbB**
**Siebertstraße 3**
**81675 München (DE)**

(54) **PROPYLENE RESIN COMPOSITION**

(57)    A propylene resin composition comprising: a propylene resin (A) including a heterophasic propylene polymer material (A-1) which comprises a polymer (I) comprising 80 mass% or more monomer units derived from propylene and a polymer (II) comprising monomer units derived from at least one α-olefin selected from the group consisting of ethylene and α-olefins each having 4-12 carbon atoms and monomer units derived from pro-
pylene; ethylene/α-olefin copolymers (B) comprising an ethylene/α-olefin copolymer (B-1) having a melt flow rate of 0.8 g/10 min or less and an ethylene/α-olefin copolymer (B-2) having a melt flow rate of 10 g/10 min or greater; an inorganic filler (C) excluding carbon black; 0.5-5.0 parts by weight of carbon black (D) having a pH higher than 5; and 0.1-1.0 parts by weight of a modified polypropylene (E).

EP 4 190 852 A1

**Description**

TECHNICAL FIELD

The present invention relates to a propylene resin composition.

BACKGROUND ART

A compact obtained by molding a propylene resin composition is used for various applications such as an automobile interior material and a home appliance material. In these applications, impact resistance, scratch resistance, and the like are required, and as a molding composition excellent in these properties, a propylene resin composition containing a propylene resin, a copolymer of ethylene and an $\alpha$-olefin having 4 or more carbon atoms, an inorganic filler, a fatty acid amide, and carbon black at a specific ratio has been proposed (see, for example, Patent Document 1).

PRIOR ART DOCUMENTS

PATENT DOCUMENTS

Patent Document 1: JP-A-2014-34614

SUMMARY OF THE INVENTION

PROBLEMS TO BE SOLVED BY THE INVENTION

As a preferable method for molding the above-described compact, an injection molding method is widely used. In injection molding, a blue streak-like appearance defect may occur on a surface of an injection compact, and suppression thereof is required. In addition, an automobile interior material and the like are often used in a severe temperature environment, and further improvement in heat degradation resistance is required.

Under such a circumstance, a problem to be solved by the present invention is to provide a propylene resin composition capable of producing an injection compact having a favorable surface appearance and excellent heat degradation resistance while maintaining excellent characteristics of a conventional propylene resin composition.

MEANS FOR SOLVING THE PROBLEMS

The present inventor has made intensive studies in view of such a background, and has completed the present invention.

That is, the present invention is

[1] a propylene resin composition containing:

a propylene resin (A) containing a heterophasic propylene polymer material (A-1) containing a polymer (I) containing 80% by mass or more of monomer units derived from propylene (provided that the total mass of the polymer (I) is 100% by mass) and a polymer (II) containing monomer units derived from at least one $\alpha$-olefin selected from the group consisting of ethylene and $\alpha$-olefins each having 4 or more and 12 or less carbon atoms and monomer units derived from propylene;
an ethylene/$\alpha$-olefin copolymer (B) containing an ethylene/$\alpha$-olefin copolymer (B-1) having a melt flow rate (190°C, load of 2.16 kgf, in accordance with JIS-K-7210) of 0.8 g/10 min or less and an ethylene/$\alpha$-olefin copolymer (B-2) having a melt flow rate (190°C, load of 2.16 kgf, in accordance with JIS-K-7210) of 10 g/10 min or more;
an inorganic filler (C) other than carbon black;
carbon black (D) having a pH of higher than 5; and
a modified polypropylene (E), in which
the content of the carbon black (D) is 0.5 parts by weight or more and 5.0 parts by weight or less, and the content of the modified polypropylene (E) is 0.1 parts by weight or more and 1.0 parts by weight or less with respect to 100 parts by weight of the total weight of the propylene resin (A), the ethylene/$\alpha$-olefin copolymer (B), and the inorganic filler (C).

Hereinafter, [2] to [6] are preferable aspects or embodiments of the present invention.

[2] The propylene resin composition according to [1], in which the content of the propylene resin (A) is 50% by weight or more and 75% by weight or less, the content of the ethylene/α-olefin copolymer (B) is 10% by weight or more and 25% by weight or less, and the content of the inorganic filler (C) is 15% by weight or more and 25% by weight or less with respect to 100% by weight of the total weight of the propylene resin (A), the ethylene/α-olefin copolymer (B), and the inorganic filler (C).

[3] The propylene resin composition according to [1] or [2], in which
the ethylene/α-olefin copolymer (B-1) contains:

an ethylene/1-octene copolymer (B-1-1) having a melt flow rate (190°C, load of 2.16 kgf, in accordance with JIS-K-7210) of 0.8 g/10 min or less; and
an ethylene/1-butene copolymer (B-1-2) having a melt flow rate (190°C, load of 2.16 kgf, in accordance with JIS-K-7210) of 0.8 g/10 min or less.

[4] The propylene resin composition according to any one of [1] to [3], in which the ethylene/α-olefin copolymer (B-2) contains an ethylene/1-octene copolymer.

[5] The propylene resin composition according to any one of [1] to [4], further containing a lubricant (F).

[6] The propylene resin composition according to [5], in which the lubricant (F) is at least one selected from the group consisting of a fatty acid amide-based lubricant and a silicone-based lubricant.

EFFECT OF THE INVENTION

The present invention can provide a propylene resin composition capable of producing an injection compact having a favorable surface appearance and excellent heat degradation resistance, and preferable for a material for injection molding.

MODE FOR CARRYING OUT THE INVENTION

A propylene resin composition of the present invention contains:

a propylene resin (A) containing a heterophasic propylene polymer material (A-1) containing a polymer (I) containing 80% by mass or more of monomer units derived from propylene (provided that the total mass of the polymer (I) is 100% by mass) and a polymer (II) containing monomer units derived from at least one α-olefin selected from the group consisting of ethylene and α-olefins each having 4 or more and 12 or less carbon atoms and monomer units derived from propylene;

an ethylene/α-olefin copolymer (B) containing an ethylene/α-olefin copolymer (B-1) having a melt flow rate (190°C, load of 2.16 kgf, in accordance with JIS-K-7210) of 0.8 g/10 min or less and an ethylene/α-olefin copolymer (B-2) having a melt flow rate (190°C, load of 2.16 kgf, in accordance with JIS-K-7210) of 10 g/10 min or more;

an inorganic filler (C) other than carbon black;

carbon black (D) having a pH of higher than 5; and

a modified polypropylene (E), in which

the content of the carbon black (D) is 0.5 parts by weight or more and 5.0 parts by weight or less, and the content of the modified polypropylene (E) is 0.1 parts by weight or more and 1.0 parts by weight or less with respect to 100 parts by weight of the total weight of the propylene resin (A), the ethylene/α-olefin copolymer (B), and the inorganic filler (C).

That is, the propylene resin composition of the present invention contains the following components (A), (B), (C), (D), and (E).

Propylene resin (A)

The propylene resin composition of the present invention contains the propylene resin (A).

The propylene resin composition of the present invention preferably contains the propylene resin (A) in an amount of 50% by weight or more and 75% by weight or less with respect to 100% by weight of the total weight of the components (A), (B), and (C).

The propylene resin (A) is a propylene resin containing a heterophasic propylene polymer material (A-1) containing a polymer (I) containing 80% by mass or more of monomer units derived from propylene (provided that the total mass of the polymer (I) is 100% by mass) and a polymer (II) containing monomer units derived from at least one α-olefin selected from the group consisting of ethylene and α-olefins each having 4 or more and 12 or less carbon atoms and monomer units derived from propylene.

The propylene resin (A) preferably has an isotactic pentad fraction of 0.97 or more, more preferably 0.98 or more as measured by 13C-NMR from a viewpoint of a balance of the resin composition between rigidity and impact resistance. As the isotactic pentad fraction of the propylene resin (A) is closer to 1, the propylene resin (A) is a highly crystalline polymer having a molecular structure exhibiting higher stereoregularity.

When the propylene resin (A) is the heterophasic propylene polymer material (A-1), a value measured for a chain of propylene units of the polymer (I) in the heterophasic propylene polymer material is used as the isotactic pentad fraction.

Heterophasic propylene polymer material (A-1)

The heterophasic propylene polymer material (A-1) is preferably a propylene-ethylene-based heterophasic propylene polymer material containing 55 to 95% by weight of the polymer (I) and 5 to 45% by weight of the polymer (II) (provided that the total amount of the heterophasic propylene polymer material (A-1) is 100% by weight) from a viewpoint of obtaining a favorable balance of the propylene resin composition between rigidity and impact resistance. The heterophasic propylene polymer material (A-1) is more preferably a heterophasic propylene polymer material containing 65 to 92% by weight of the polymer (I) and the polymer (II), and still more preferably a heterophasic propylene polymer material containing 70 to 90% by weight of the polymer (I) and 10 to 30% by weight of the polymer (II) .

The melt flow rate (MFR) of the heterophasic propylene polymer material (A-1) measured in accordance with JIS-K-7210 at 230°C under a load of 2.16 kgf is preferably 10 to 200 g/10 min and more preferably 30 to 150 g/10 min from a viewpoint of improving moldability and impact resistance.

The heterophasic propylene polymer material (A-1) can be produced by the following method using a polymerization catalyst.

Examples of the polymerization catalyst include: a Ziegler type catalyst system; a Ziegler-Natta type catalyst system; a catalyst system containing a transition metal compound of group 4 of the periodic table having a cyclopentadienyl ring and an alkylaluminoxane; a catalyst system containing a transition metal compound of group 4 of the periodic table having a cyclopentadienyl ring, a compound that reacts with the transition metal compound to form an ionic complex, and an organic aluminum compound; and a catalyst system in which a catalyst component such as a transition metal compound of group 4 of the periodic table having a cyclopentadienyl ring, a compound that forms an ionic complex, or an organic aluminum compound is supported on inorganic particles such as silica and clay minerals, and modified, and a prepolymerization catalyst prepared by prepolymerizing ethylene or an $\alpha$-olefin in the presence of the above catalyst systems may be used.

Examples of the above catalyst systems include catalyst systems described in JP-A-61-218606, JP-A-5-194685, JP-A-7-216017, JP-A-9-316147, JP-A-10-212319, and JP-A-2004-182981.

Examples of a polymerization method include bulk polymerization, solution polymerization, slurry polymerization, and gas phase polymerization. Here, the bulk polymerization refers to a method in which polymerization is performed using a liquid olefin as a medium at a polymerization temperature, and the solution polymerization or the slurry polymerization refers to a method in which polymerization is performed in an inactivated hydrocarbon solvent such as propane, butane, isobutane, pentane, hexane, heptane, or octane. The gas phase polymerization refers to a method for polymerizing a monomer in a gaseous state in a medium using the monomer in the gaseous state as the medium.

These polymerization methods may be either a batch type or a multistage type in which a plurality of polymerization reaction tanks is connected in series, and these polymerization methods may be arbitrarily combined. A continuous gas phase polymerization method or a bulk-gas phase polymerization method in which a bulk polymerization method and a gas phase polymerization method are continuously performed is preferable from industrial and economic viewpoints.

Note that various conditions (polymerization temperature, polymerization pressure, monomer concentration, catalyst input amount, polymerization time, and the like) in a polymerization step only need to be appropriately determined according to physical properties and the like of the target heterophasic propylene polymer material (A-1).

In the production of the heterophasic propylene polymer material (A-1), the heterophasic propylene polymer material (A-1) may be dried at a temperature equal to or lower than a temperature at which the heterophasic propylene polymer material (A-1) melts as necessary in order to remove a residual solvent contained in the heterophasic propylene polymer material (A-1), an ultra-low molecular weight oligomer produced as a by-product during production, and the like. Examples of a drying method include methods described in JP-A-55-75410 and JP-B-2565753.

The polymer (I) containing 80% by mass or more of monomer units derived from propylene contained in the heterophasic propylene polymer material (A-1) may be, for example, a propylene homopolymer or may contain monomer units derived from monomers other than propylene. When the polymer (I) contains monomer units derived from monomers other than propylene, the content thereof may be, for example, 0.01% by mass or more and less than 20% by mass with respect to the total mass of the polymer (I).

Examples of the monomer other than propylene include ethylene and an $\alpha$-olefin having 4 or more carbon atoms. Among these, at least one selected from the group consisting of ethylene and $\alpha$-olefins each having 4 to 10 carbon atoms is preferable, at least one selected from the group consisting of ethylene, 1-butene, 1-hexene, and 1-octene is more preferable, and at least one selected from the group consisting of ethylene and 1-butene is still more preferable.

Examples of the polymer containing monomer units derived from monomers other than propylene include a propylene/ethylene copolymer, a propylene/1-butene copolymer, a propylene/1-hexene copolymer, a propylene/1-octene copolymer, a propylene/ethylene/1-butene copolymer, a propylene-ethylene-1-hexene copolymer, and a propylene/ethylene/1-octene copolymer.

The polymer (I) is preferably a propylene homopolymer, a propylene-ethylene copolymer, a propylene-1-butene copolymer, or a propylene-ethylene/1-butene copolymer, and more preferably a propylene homopolymer from a viewpoint of dimensional stability of a compact.

A limiting viscosity number (hereinafter, represented by $[\eta]_I$) of the polymer (I) measured in tetralin at 135°C is preferably 0.7 to 1.3 dl/g, and more preferably 0.8 to 1.1 dl/g from a viewpoint of obtaining a favorable balance between fluidity when the propylene resin composition is melted and toughness of a compact formed of the propylene resin composition.

A molecular weight distribution (Q value, ratio (Mw/Mn) of weight average molecular weight (Mw) to number average molecular weight (Mn)) of the polymer (I) contained in the heterophasic propylene polymer material (A-1) measured by gel permeation chromatography (GPC) is preferably 3 or more and less than 7, and more preferably 3 to 5.

The polymer (II) containing monomer units derived from at least one α-olefin selected from the group consisting of ethylene and α-olefins each having 4 or more and 12 or less carbon atoms and monomer units derived from propylene, contained in the heterophasic propylene polymer material (A-1) preferably contains 20% by mass or more of monomer units derived from at least one α-olefin selected from the group consisting of ethylene and α-olefins each having 4 or more and 12 or less carbon atoms and contains monomer units derived from propylene.

In the polymer (II), the content of monomer units derived from at least one α-olefin selected from the group consisting of ethylene and α-olefins each having 4 or more and 12 or less carbon atoms may be 20 to 70% by mass, 20 to 60% by mass, or 25 to 40% by mass.

In the polymer (II), as the at least one α-olefin selected from the group consisting of ethylene and α-olefins each having 4 or more and 12 or less carbon atoms, at least one selected from the group consisting of ethylene and α-olefins each having 4 to 10 carbon atoms is preferable, at least one selected from the group consisting of ethylene, 1-butene, 1-hexene, 1-octene, and 1-decene is more preferable, and at least one selected from the group consisting of ethylene and 1-butene is still more preferable.

Examples of the polymer (II) include a propylene/ethylene copolymer, a propylene/ethylene/1-butene copolymer, a propylene/ethylene/1-hexene copolymer, a propylene/ethylene/1-octene copolymer, a propylene/ethylene/1-decene copolymer, a propylene/1-butene copolymer, a propylene/1-hexene copolymer, a propylene/1-octene copolymer, and a propylene/1-decene copolymer. Among these, a propylene/ethylene copolymer, a propylene/1-butene copolymer, and a propylene/ethylene/1-butene copolymer are preferable, and a propylene/ethylene copolymer is more preferable.

A ratio (propylene content/ethylene content (weight/weight)) between the weight of a propylene-derived structural unit (propylene content) and the weight of an ethylene-derived structural unit (ethylene content) in the polymer (II) is preferably 80/20 to 30/70, more preferably 80/20 to 40/60, and particularly preferably 75/25 to 60/40 from a viewpoint of obtaining a favorable balance between rigidity and impact resistance.

A limiting viscosity number (hereinafter, represented by $[\eta]_{II}$) of the polymer (II) containing monomer units derived from at least one α-olefin selected from the group consisting of ethylene and α-olefins each having 4 or more and 12 or less carbon atoms and monomer units derived from propylene, contained in the heterophasic propylene polymer material (A-1), the limiting viscosity number being measured in tetralin at 135°C, is 4.5 to 7.5 dl/g, preferably 4.5 to 6.5 dl/g, and more preferably 5.0 to 6.0 dl/g.

A ratio ($[\eta]_{II}/[\eta]_I$) of the limiting viscosity number ($[\eta]_{II}$) of the polymer (II) to the limiting viscosity number ($[\eta]_I$) of the polymer (I) is preferably 1 to 20, more preferably 2 to 10, and still more preferably 2 to 9.

Note that a limiting viscosity number (unit: dl/g) in the present invention is a value measured at a temperature of 135°C using tetralin as a solvent by the following method.

A reduced viscosity is measured at three points of concentrations of 0.1 g/dl, 0.2 g/dl, and 0.5 g/dl using an Ubbelohde viscometer. The limiting viscosity number is determined by the calculation method described on page 491 of "Polymer solution, Polymer Experiment 11" (published by KYORITSU SHUPPAN CO., LTD., 1982), that is, by an extrapolation method in which a reduced viscosity is plotted with respect to a concentration and the concentration is extrapolated to zero.

When the heterophasic propylene polymer material (A-1) is a polymer obtained by multistage polymerization of the polymer (I) and the polymer (II), the limiting viscosity number of the polymer (I) or the polymer (II) is determined from a polymer powder partially taken out from a former-stage polymerization tank, and using this value of the limiting viscosity number and the contents of the components, the limiting viscosity number of the remaining component can be calculated.

When the heterophasic propylene polymer material containing the polymer (I) and the polymer (II) is a copolymer produced by a method in which the polymer (I) is obtained in a former-stage polymerization step and the polymer (II) is obtained in a later-stage step, procedures for measuring and calculating the contents of the polymer (I) and the polymer (II) and the limiting viscosity numbers ($[\eta]_{Total}$, $[\eta]_I$, and $[\eta]_{II}$) are as follows. Note that the limiting viscosity number ($[\eta]_{Total}$) indicates the limiting viscosity number of the whole heterophasic propylene polymer material containing the polymer (I) and the polymer (II) .

From the limiting viscosity number ($[\eta]_I$) of the polymer (I) obtained in the former-stage polymerization step, the limiting viscosity number ($[\eta]_{Total}$) of the final polymer after the later-stage polymerization step measured by the above method, and the content of the polymer (II) contained in the final polymer, the limiting viscosity number ($[\eta]_{II}$) of the polymer (II) is calculated by the following formula.

$$[\eta]_{II} = ([\eta]_{Total} - [\eta]_I \times X_I)/X_{II}$$

$[\eta]_{Total}$: limiting viscosity number (dl/g) of final polymer after later-stage polymerization step

$[\eta]_I$: limiting viscosity number (dl/g) of polymer powder taken out from polymerization tank after former-stage polymerization step

$X_I$: weight ratio of polymer (I) to whole heterophasic propylene polymer material containing polymer (I) and polymer (II)

$X_{II}$: weight ratio of polymer (II) to whole heterophasic propylene polymer material containing polymer (I) and polymer (II)

Note that $X_I$ and $X_{II}$ are determined from a mass balance at the time of polymerization.

The $X_{II}$: weight ratio of polymer (II) to whole heterophasic propylene polymer material containing polymer (I) and polymer (II) may be calculated by the following formula by measuring crystal melting heat quantity of each of the polymer (I) and the final polymer.

$$X_{II} = 1 - (\Delta Hf)_T/(\Delta Hf)_P$$

$(\Delta Hf)_T$: melting heat quantity (cal/g) of final polymer

$(\Delta Hf)_P$: melting heat quantity (cal/g) of polymer (I)

When the propylene resin (A) used in the present invention is a propylene polymer mixture containing the heterophasic propylene polymer material (A-1) and a propylene homopolymer (A-2) (hereinafter, also referred to as a propylene polymer mixture (A-3)), the content of the heterophasic propylene polymer material (A-1) contained in the propylene polymer mixture (A-3) is preferably 30 to 99% by weight, and the content of the propylene homopolymer (A-2) is preferably 70 to 1% by weight. More preferably, the content of the heterophasic propylene polymer material (A-1) is 45 to 95% by weight, and the content of the propylene homopolymer (A-2) is 55 to 5% by weight.

Propylene homopolymer (A-2)

The limiting viscosity of the propylene homopolymer (A-2) is less than 1.5 dl/g, preferably 0.1 to 1.2 dl/g, and more preferably 0.5 to 1.0 dl/g.

The isotactic pentad fraction of the propylene homopolymer (A-2) is preferably 0.97 or more, and more preferably 0.98 or more.

The melt flow rate (MFR: 230°C, load: 2160 g) of the propylene homopolymer (A-2) is preferably 10 to 500 g/10 min, and more preferably 40 to 350 g/10 min.

Examples of a method for producing the propylene homopolymer (A-2) include a production method using a catalyst system similar to the catalyst system used for producing the heterophasic propylene polymer material (A-1), and examples of a polymerization method include bulk polymerization, solution polymerization, slurry polymerization, and gas phase polymerization.

Propylene polymer mixture (A-3)

When the propylene resin (A) used in the present invention is the propylene polymer mixture (A-3) containing the heterophasic propylene polymer material (A-1) and the propylene homopolymer (A-2), the content of the heterophasic propylene polymer material (A-1) contained in the propylene polymer mixture (A-3) is preferably 30 to 99% by weight, and the content of the propylene homopolymer (A-2) is preferably 70 to 1% by weight. More preferably, the content of the heterophasic propylene polymer material (A-1) is 45 to 95% by weight, and the content of the propylene homopolymer (A-2) is 55 to 5% by weight.

In this case, preferably, the heterophasic propylene polymer material (A-1) is first produced, and then the heterophasic propylene polymer material (A-1) is blended with the propylene homopolymer (A-2) to produce the propylene polymer mixture (A-3). More preferably, the polymer (I) is produced in one stage of the multistage polymerization, the polymer (II) is produced in another stage to produce the heterophasic propylene polymer material (A-1) first, and then the heterophasic propylene polymer material (A-1) is blended with the separately produced propylene homopolymer (A-2) to produce the propylene polymer mixture (A-3).

Ethylene/$\alpha$-olefin copolymer (B)

The propylene resin composition of the present invention contains the ethylene/$\alpha$-olefin copolymer (B). The propylene resin composition of the present invention preferably contains the copolymer (B) of ethylene and an $\alpha$-olefin having 3 or more carbon atoms in an amount of 10% by weight or more and 25% by weight or less with respect to 100% by weight of the total weight of the components (A), (B), and (C).

The ethylene/$\alpha$-olefin copolymer (B) contains: an ethylene/$\alpha$-olefin copolymer (B-1) having a melt flow rate (190°C, load of 2.16 kgf, in accordance with JIS-K-7210) of 0.8 g/10 min or less; and an ethylene/$\alpha$-olefin copolymer (B-2) having a melt flow rate (190°C, load of 2.16 kgf, in accordance with JIS-K-7210) of 10 g/10 min or more.

A content ratio between the ethylene/$\alpha$-olefin copolymer (B-1) having a melt flow rate (190°C, load of 2.16 kgf, in accordance with JIS-K-7210) of 0.8 g/10 min or less and the ethylene/$\alpha$-olefin copolymer (B-2) having a melt flow rate (190°C, load of 2.16 kgf, in accordance with JIS-K-7210) of 10 g/10 min or more is not particularly limited, but a weight ration of (B-1) : (B-2) is preferably 99 : 1 to 1 : 99, more preferably 90 : 10 to 50 : 50, and particularly preferably 60 : 40 to 80 : 20. The ratio of the ethylene/$\alpha$-olefin copolymer (B-1) is preferably increased from a viewpoint of gloss of a compact, and the ratio of the ethylene/$\alpha$-olefin copolymer (B-2) is preferably increased from a viewpoint of fluidity.

The melt flow rate of the ethylene/$\alpha$-olefin copolymer (B) measured in accordance with JIS-K-7210 at 190°C under a load of 2.16 kgf is usually 50 g/10 min or less, more preferably 0.01 to 50 g/10 min, and still more preferably 0.05 to 40 g/10 min.

The density of the ethylene/$\alpha$-olefin copolymer (B) is preferably 0.850 to 0.900 g/cm3, more preferably 0.855 to 0.875 g/cm$^3$, and still more preferably 0.860 to 0.872 g/cm$^3$.

Preferable examples of the $\alpha$-olefin used in the ethylene/$\alpha$-olefin copolymer (B) include $\alpha$-olefins each having 4 to 10 carbon atoms. Specific examples thereof include propylene, 1-butene, 1-pentene, 1-hexene, 4-methyl-1-pentene, 1-octene, 1-decene, and also include an $\alpha$-olefin having a cyclic structure, such as vinyl cyclohexane. Preferable examples thereof include 1-butene, 1-hexene, and 1-octene.

Specific examples of the ethylene/$\alpha$-olefin copolymer (B) include an ethylene/propylene copolymer, an ethylene/1-butene copolymer, an ethylene/1-hexene copolymer, an ethylene/1-octene copolymer, an ethylene/1-decene copolymer, an ethylene/(3-methyl-1-butene) copolymer, and a copolymer of ethylene and an $\alpha$-olefin having a cyclic structure.

The content of the $\alpha$-olefin contained in the ethylene/$\alpha$-olefin copolymer (B) is preferably 1 to 49% by weight, more preferably 5 to 49% by weight, and still more preferably 10 to 49% by weight (provided that the weight of the ethylene/$\alpha$-olefin copolymer (B) is 100% by weight).

The ethylene/$\alpha$-olefin copolymer (B) can be produced using a polymerization catalyst.

Examples of the polymerization catalyst include a homogeneous catalyst system represented by a metallocene catalyst and a Ziegler-Natta catalyst system.

Examples of the homogeneous catalyst system include: a catalyst system containing a transition metal compound of group 4 of the periodic table having a cyclopentadienyl ring and an alkylaluminoxane; a catalyst system containing a transition metal compound of group 4 of the periodic table having a cyclopentadienyl ring, a compound that reacts with the transition metal compound to form an ionic complex, and an organic aluminum compound; a catalyst system in which a catalyst component such as a transition metal compound of group 4 of the periodic table having a cyclopentadienyl ring, a compound that forms an ionic complex, or an organic aluminum compound is supported on inorganic particles such as silica and clay minerals, and modified; and a prepolymerization catalyst system prepared by prepolymerizing ethylene or an $\alpha$-olefin in the presence of the above catalyst systems.

Examples of the Ziegler-Natta catalyst system include a catalyst system using a titanium-containing solid transition metal component and an organometallic component in combination.

As the ethylene/$\alpha$-olefin copolymer (B), a commercially available product may be used. Examples thereof include ENGAGE (registered trademark) manufactured by Dow Chemical Japan Co., Ltd., TAFMER (registered trademark) manufactured by Mitsui Chemicals, Inc., NEO-ZEX (registered trademark) and ULTZEX (registered trademark) manufactured by Prime Polymer Co., Ltd., and EXCELLENE FX (registered trademark), SUMIKATHENE (registered trademark), and ESPRENE SPO (registered trademark) manufactured by Sumitomo Chemical Co., Ltd.

Ethylene/α-olefin copolymer (B-1)

The ethylene/α-olefin copolymer (which may be an ethylene/α-olefin/diene copolymer) which is the component (B-1) constituting the ethylene/α-olefin copolymer (B) has a melt flow rate (190°C, load of 2.16 kgf, in accordance with JIS-K-7210) of 0.8 g/10 min or less, preferably 0.05 to 0.6 g/10 min. When the melt flow rate of the component (B-1) is 0.8 g/10 min or less, the surface gloss of an obtained compact is less likely to be excessive, and when the melt flow rate is 0.05 g/10 min or more, a decrease in fluidity of the resin composition can be effectively prevented.

Examples of an α-olefin constituting the ethylene/α-olefin copolymer (which may be an ethylene-α-olefin-diene copolymer) used as the component (B-1) include an α-olefin having 3 to 10 carbon atoms, and specific preferable examples thereof include propylene, 1-butene, 1-hexene, and 1-octene.

Among these, 1-octene and 1-butene are preferable. That is, the ethylene/α-olefin copolymer (B-1) preferably contains:

an ethylene/1-octene copolymer (B-1-1) having a melt flow rate (190°C, load of 2.16 kgf, in accordance with JIS-K-7210) of 0.8 g/10 min or less; and
an ethylene/1-butene copolymer (B-1-2) having a melt flow rate (190°C, load of 2.16 kgf, in accordance with JIS-K-7210) of 0.8 g/10 min or less.

At this time, the content of the ethylene/1-octene copolymer (B-1-1) is preferably 0 to 50% by weight, and particularly preferably 0 to 40% by weight with respect to the whole ethylene/α-olefin copolymer (B-1).

At this time, the content of the ethylene/1-butene copolymer (B-1-2) is preferably 50 to 100% by weight, and particularly preferably 60 to 100% by weight with respect to the whole ethylene/α-olefin copolymer (B-1).

When the component (B-1) is an ethylene-α-olefindiene copolymer, examples of a diene constituting the ethylene-α-olefin-diene copolymer include a cyclic nonconjugated diene such as 5-ethylidene-2-norbornene, 5-propylidene-2-norbornene, dicyclopentadiene, 5-vinyl-2-norbornene, 5-methylene-2-norbornene, 5-isopropylidene-2-norbornene, or norbornadiene; and a chain conjugated diene such as 1,4-hexadiene, 4-methyl-1,4-hexadiene, 5-methyl-1,4-hexadiene, 5-methyl-1,5-heptadiene, 6-methyl-1,5-heptadiene, 6-methyl-1,7-octadiene, or 7-methyl-1,6-octadiene. Among these, 1,4-hexadiene, dicyclopentadiene, and 5-ethylidene-2-norbornene are preferably used.

Ethylene/α-olefin copolymer (B-2)

The ethylene/α-olefin copolymer which is the component (B-2) constituting the ethylene/α-olefin copolymer (B) has a melt flow rate of 10 g/10 min or more, preferably 10 to 50 g/10 min, more preferably 10 to 40 g/10 min. When the melt flow rate of the component (B-2) is 10 g/10 min or more, a decrease in fluidity of the resin composition can be effectively prevented. When the melt flow rate is 50 g/10 min or less, the surface gloss of a compact is less likely to be excessive, and a decrease in impact resistance of the compact can be effectively prevented.

Examples of the ethylene/α-olefin copolymer used as the component (B-2) include a copolymer of ethylene and an α-olefin having 3 to 10 carbon atoms, and the α-olefin is preferably propylene, 1-butene, 1-hexene, 1-octene, or the like.

Among these, 1-octene is preferable, that is, the ethylene/α-olefin copolymer (B-2) preferably contains an ethylene/1-octene copolymer. At this time, the content of the ethylene/1-octene copolymer is preferably 50 to 100% by weight, and particularly preferably 60 to 100% by weight with respect to the whole ethylene/α-olefin copolymer (B-2) .

Inorganic filler (C)

The propylene resin composition of the present invention contains the inorganic filler (C). The propylene resin composition of the present invention preferably contains the inorganic filler (C) in an amount of 15% by weight or more and 25% by weight or less with respect to 100% by weight of the total weight of the components (A), (B), and (C).

The inorganic filler (C) in the present invention is an inorganic filler other than carbon black. Specific examples of the inorganic filler (C) include talc, mica, calcium carbonate, barium sulfate, magnesium carbonate, clay, alumina, silica, calcium sulfate, silica sand, titanium oxide, magnesium hydroxide, zeolite, molybdenum, silica earth, sericite, SHIRASU (a kind of pumiceous sand), calcium hydroxide, calcium sulfite, sodium sulfate, bentonite, magnesium oxysulfate, potassium titanate, aluminum borate, calcium silicate, carbon fiber, glass fiber, and metal fiber. Among these, talc is preferably used.

The inorganic filler (C) may be used singly or in combination of two or more types thereof.

Examples of the shape of the inorganic filler (C) include a powder shape, a flake shape, a granular shape, and a fibrous shape.

The inorganic filler (C) may be used as it is without being treated, but may be used after a surface of the inorganic filler (C) is treated with a silane coupling agent, a titanium coupling agent, or a surfactant in order to improve interfacial adhesion with the component (A) and improve dispersibility. Examples of the surfactant include a higher fatty acid, a higher fatty acid ester, a higher fatty acid amide, and a higher fatty acid salt.

The average particle diameter of the inorganic filler (C) is preferably 10 μm or less, and more preferably 5 μm or less. Here, the "average particle diameter" in the present invention means a 50% equivalent particle diameter $D_{50}$ determined from an integral distribution curve determined by a laser diffraction method using a Microtrac particle diameter analyzer (SPA method) manufactured by Nikkiso Co., Ltd. after a sample is put in an ethanol solution and dispersed for ten minutes by an ultrasonic cleaner.

Carbon black (D)

The propylene resin composition of the present invention contains the carbon black (D) in an amount of 0.5 parts by weight or more and 5.0 parts by weight or less with respect to 100 parts by weight of the total weight of the components (A), (B), and (C). The content of the carbon black (D) is preferably more than 0.5 parts by weight and 5.0 parts by weight or less, more preferably 1.0 parts by weight or more and 4.5 parts by weight or less, and particularly preferably 2.2 parts by weight or more and 4.0 parts by weight or less with respect to 100 parts by weight of the total weight of the components (A), (B), and (C) .

Preferable examples of the carbon black (D) include acetylene black, furnace black, channel black, ketjen black, thermal black, medium thermal black, and lamp black (oil smoke). Among these, furnace black and channel black having excellent coloring power are preferably used.

The average particle diameter of the carbon black (D) is preferably 50 nm or less, and more preferably 30 nm or less, from a viewpoint of dispersibility. The average particle diameter of the carbon black (D) is preferably 1 nm or more.

The pH of the carbon black (D) is more than 5, preferably more than 5 and 10 or less, more preferably more than 5 and 9 or less, particularly preferably 5.5 or more and 8 or less, and further particularly preferably 6.5 or more and 8 or less.

When the pH of the carbon black (D) is more than 5, the propylene resin composition of the present invention exhibits excellent heat degradation resistance.

There is no particular upper limit to the pH of the carbon black (D), but the pH is usually 10 or less, preferably 9 or less, and particularly preferably 8 or less in consideration of cost, availability, and the like.

The pH of the carbon black (D) can be adjusted by a method conventionally used in the art, but for example, a method for preparing the pH of the carbon black (D) by oxidizing a surface of furnace carbon black or the like to introduce a functional group such as -OH, -CO, or -COOH can be preferably used. In addition, products having various values of pH can be obtained from manufacturers.

The pH of the carbon black (D) can be measured by a method conventionally used in the art, and for example, a method for measuring the pH of a mixed liquid of the carbon black and distilled water with a glass electrode pH meter can be adopted.

In addition, the carbon black (D) may be subjected to a surface treatment for improving a filling property into a resin. Examples of a surface treatment agent include titanate-based and aluminum-based surface treatment agents.

In addition, the carbon black (D) may be added to the propylene resin composition of the present invention as a masterbatch in which a component such as the resin and the carbon black (E) are mixed.

The carbon black (D) may be used singly or in combination of two or more types thereof.

Modified polypropylene (E)

The modified polypropylene (E) used in the resin composition of the present invention is an acid-modified polypropylene and/or a hydroxy-modified polypropylene, and contributes to improvement in scratch resistance, a physical property balance, and the like in the resin composition of the present invention and a compact using the resin composition.

The modified polypropylene as the component (E) is not particularly limited as long as the modified polypropylene is polypropylene-based and acid-modified and/or hydroxy-modified, and a conventionally known modified polypropylene can be used.

The acid-modified polypropylene is obtained by graft-copolymerizing and modifying a polypropylene such as a propylene homopolymer or a propylene copolymer using, for example, an unsaturated carboxylic acid such as maleic acid or maleic anhydride. This graft copolymerization is performed, for example, by causing the polypropylene to react with an unsaturated carboxylic acid using a radical generator such as benzoyl peroxide in an appropriate solvent. In addition, a component of the unsaturated carboxylic acid or a derivative thereof can also be introduced into a polymer chain by random or block copolymerization with a monomer for polypropylene.

Examples of the unsaturated carboxylic acid used for modification include a compound having a polymerizable double bond, in which a carboxyl group and, as necessary, a functional group such as a hydroxyl group or an amino group are introduced, such as maleic acid, fumaric acid, itaconic acid, acrylic acid, or methacrylic acid.

Examples of the derivative of the unsaturated carboxylic acid include an acid anhydride of the unsaturated carboxylic acid, an ester thereof, an amide thereof, an imide thereof, and a metal salt thereof, and specific examples thereof include maleic anhydride, itaconic anhydride, methyl acrylate, ethyl acrylate, butyl acrylate, methyl methacrylate, ethyl methacrylate, monoethyl maleate, diethyl maleate, monomethyl fumarate, dimethyl fumarate, acrylamide, methacrylamide, monoamide maleate, diamide maleate, monoamide fumarate, maleimide, N-butyl maleimide, and sodium methacrylate. The derivative of the unsaturated carboxylic acid is preferably maleic anhydride.

As graft reaction conditions, for example, by using about 0.001 to 10 parts by weight of an organic peroxide including a dialkyl peroxide such as di-t-butyl peroxide, t-butylcumyl peroxide, dicumyl peroxide, 2,5-dimethyl-2,5-di(t-butylperoxy) hexane, or 2,5-dimethyl-2,5-di(t-butylperoxy) hexine-3, a peroxyester such as t-butylperoxyacetate, t-butylperoxybenzoate, t-butylperoxyisopropyl carbonate, 2,5-dimethyl-2,5-di(benzoylperoxy) hexane, or 2,5-dimethyl-2,5-di(benzoylperoxy) hexine-3, a diacyl peroxide such as benzoyl peroxide, and a hydroperoxide such as diisopropylbenzene hydroperoxide or 2,5-dimethyl-2,5-di(hydroperoxy) hexane with respect to 100 parts by weight of the polypropylene, a reaction is caused to occur in a molten state or a solution state at a temperature of about 80 to 300°C.

The acid modification amount (also referred to as graft ratio) of the acid-modified polypropylene is not particularly limited, but the acid modification amount is preferably 0.05 to 10% by weight, and more preferably 0.07 to 5% by weight in terms of maleic anhydride.

Preferable examples of the acid-modified polypropylene include maleic anhydride-modified polypropylene from a viewpoint of the magnitude of the effect of the present invention or the like.

The hydroxy-modified polypropylene is a modified polypropylene containing a hydroxyl group. The modified polypropylene may have a hydroxyl group at an appropriate site, for example, at a terminal of a main chain or at a side chain.

Examples of a polypropylene constituting the hydroxy-modified polypropylene include a propylene homopolymer, a copolymer of propylene with an α-olefin such as ethylene, butene, 4-methylpentene-1, hexene, octene, nonene, decene, or dodecene, and a copolymer of propylene with a copolymerizable monomer other than the α-olefin.

Preferable examples of the hydroxy-modified polypropylene include a polypropylene homopolymer such as isotactic polypropylene, a random copolymer of propylene and an α-olefin (for example, ethylene, butene, or hexane), and a hydroxy-modified product such as a propylene-α-olefin block copolymer. Examples of a monomer for introducing the reactive group include a monomer having a hydroxyl group (for example, allyl alcohol, 2-hydroxyethyl (meth)acrylate, or 2-hydroxypropyl (meth) acrylate).

The modification amount by the monomer having a hydroxyl group is 0.1 to 20% by weight, and preferably 0.5 to 10% by weight with respect to the polypropylene resin. The average molecular weight of the hydroxy-modified polypropylene is not particularly limited. For example, in a case where the hydroxy-modified polypropylene has a low molecular weight, the hydroxy-modified polypropylene can be obtained by polymerizing a conjugated diene monomer by a known method such as anionic polymerization, hydrolyzing the polymerized product to obtain a polymer, and hydrogenating the polymer.

Note that the modified polypropylenes (E) may be used in combination of two or more types thereof.

The blending ratio of the modified polypropylene (E) is 0.1 to 1.0 parts by weight, preferably 0.3 to 1.0 parts by weight, and more preferably 0.5 to 1.0 parts by weight with respect to 100 parts by weight of the total amount of the propylene resin (A), the ethylene/α-olefin copolymer (B), and the inorganic filler (C). Since the blending amount of the modified polypropylene (E) is 0.1 parts by weight or more, the resin composition of the present invention and a compact obtained from the resin composition are excellent in scratch resistance and a physical property balance (rigidity, heat resistance, and the like). In addition, since the blending amount is 1.0 parts by weight or less, the resin composition of the present invention and a compact obtained from the resin composition are excellent in another physical property balance (impact strength and the like) and economic efficiency.

Other components

The propylene resin composition of the present invention may contain a known additive in addition to the components (A) to (E). Examples of the additive include a lubricant, a nucleating agent, a neutralizing agent, an antioxidant, a light resistance agent, a weathering agent, an ultraviolet absorber, an antistatic agent, an antiblocking agent, a processing aid, an organic peroxide, a colorant (an inorganic pigment, an organic pigment, a pigment dispersant, and the like), a foaming agent, a foaming nucleating agent, a plasticizer, a flame retardant, a crosslinking agent, a crosslinking aid, a brightener, an antibacterial agent, and a light diffusing agent. These additives may be used singly or in combination of two or more types thereof. The resin composition of the present invention may contain a resin or a rubber other than the components (A), (B), and (E) as necessary.

Examples thereof include a propylene resin other than the components (A) and (E), a copolymer of ethylene and an α-olefin having 3 or more carbon atoms, other than the component (B), an ethylene/propylene/diene copolymer (EPDM), a styrene resin, an acrylonitrile/butadiene/styrene copolymer (ABS) resin, a special acrylic rubber/acrylonitrile/styrene copolymer (AAS) resin, an acrylonitrile/chlorinated polyethylene/styrene copolymer (ACS) resin, polychloroprene, a chlorinated rubber, polyvinyl chloride, polyvinylidene chloride, an acrylic resin, an ethylene/vinyl alcohol copolymer resin, a fluororesin, polyacetal, a phenylene ether resin, polyurethane, polyamide, an ester resin, polycarbonate, polysulfone, polyether ether ketone, polyether sulfone, a thermoplastic resin such as an aromatic polyester resin, an epoxy resin, a diallyl phthalate prepolymer, a silicone resin, a silicone rubber, polybutadiene, 1,2-polybutadiene, polyisoprene, a styrene/butadiene copolymer, a butadiene/acrylonitrile copolymer, an epichlorohydrin rubber, an acrylic rubber, and a natural rubber.

A diene monomer used in EPDM is not particularly limited, but examples thereof include ethylidene norbornene (ENB), 1,4-hexadiene (1,4-HD), and dicyclopentadiene (DCPD).

As the EPDM, a commercially available product may be used. Examples thereof include ESPRENE (registered trademark) manufactured by Sumitomo Chemical Co., Ltd. and NORDEL (registered trademark) manufactured by Dow Chemical Japan Co., Ltd.

Lubricant (F)

A lubricant (F) is particularly preferably contained as another component from a viewpoint of moldability, scratch resistance of a compact, and the like.

As the lubricant, those conventionally known in the art can be appropriately used, but preferable examples thereof include a fatty acid amide, a silicone-based lubricant such as a silicone oil or a silicone gum, a fatty acid metal salt, and a higher alcohol. Among these, a fatty acid amide and a silicone-based lubricant can be particularly preferably used.

The addition amount of the lubricant (F) is not particularly limited, and can be appropriately set according to the type of lubricant, the purpose of addition, and the like, but is preferably 0.2 parts by weight or more and 3.0 parts by weight or less, and more preferably 0.3 parts by weight or more and 1.5 parts by weight or less with respect to 100 parts by weight of the total amount of the propylene resin (A), the ethylene/$\alpha$-olefin copolymer (B), and the inorganic filler (C).

Fatty acid amide

The fatty acid amide preferably used as the lubricant in the present aspect is preferably a compound represented by $RCONH_2$ (in which R represents an alkyl group or an alkenyl group having 5 to 21 carbon atoms), and examples thereof include lauric acid amide, stearic acid amide, oleic acid amide, behenic acid amide, and erucic acid amide. Among these, erucic acid amide is particularly preferable.

Examples of a commercially available product include DIAMID Y manufactured by Nihon Kasei Co., Ltd., ARAMID HT-P manufactured by Lion Akzo Co., Ltd., NEUTRON manufactured by Nippon Fine Chemical Co., Ltd., DIAMID KN manufactured by Nihon Kasei Co., Ltd., and NEUTRON S manufactured by Nippon Fine Chemical Co., Ltd.

The fatty acid amide may be used singly or in combination of two or more types thereof.

The amount of the fatty acid amide is preferably 0.2 parts by weight or more and 1.0 parts by weight or less, and more preferably 0.3 parts by weight or more and 0.5 parts by weight or less with respect to 100 parts by weight of the total amount of the propylene resin (A), the ethylene/$\alpha$-olefin copolymer (B), and the inorganic filler (C) .

Silicone-based lubricant

Preferable examples of the silicone-based lubricant preferably used as the lubricant in the present aspect include a silicone oil, a high molecular weight silicone (silicone gum), and a silicone powder.

Preferable examples of the silicone oil include a dimethyl silicone oil, a phenylmethyl silicone oil, an alkyl silicone oil, a fluorosilicone oil, a tetramethyltetraphenyltrisiloxane, and a modified silicone oil.

As the high molecular weight silicone (silicone gum), a silicone having a weight average molecular weight of 100000 or more is usually used. By using such a high molecular weight silicone (silicone gum), the high molecular weight silicone can be entangled with molecules of the constituent material, and a surface state can be maintained for a long period of time. The weight average molecular weight of the silicone gum is preferably 100000 to 800000, and more preferably 450000 to 650000. As the high molecular weight silicone (silicone gum), a non-crosslinkable silicone is preferable.

The silicone-based lubricant may be used singly or in combination of two or more types thereof.

The amount of the silicone-based lubricant is preferably 0.5 parts by weight or more and 3.0 parts by weight or less, and more preferably 1.0 parts by weight or more and 1.5 parts by weight or less with respect to 100 parts by weight of the total amount of the propylene resin (A), the ethylene/$\alpha$-olefin copolymer (B), and the inorganic filler (C).

Propylene resin composition

The propylene resin composition of the present invention contains the components (A),(B), (C), (D), and (E) .

The content of the propylene resin (A) in the propylene resin composition is usually 50 to 75% by weight, preferably 53 to 70% by weight, and more preferably 55 to 65% by weight with respect to 100% by weight of the total weight of the components (A), (B), and (C).

The content of the ethylene/$\alpha$-olefin copolymer (B) in the propylene resin composition is usually 10 to 25% by weight, preferably 12 to 20% by weight, and more preferably 14 to 20% by weight with respect to 100% by weight of the total weight of the components (A), (B), and (C).

The content of the inorganic filler (C) other than carbon black in the propylene resin composition is usually 15 to 25% by weight, preferably 20 to 26% by weight, and more preferably 20 to 24% by weight with respect to 100% by weight of the total weight of the components (A), (B), and (C) .

The melt flow rate (230°C, load of 2.16 kgf, in accordance with JIS-K-7210) of the whole propylene resin composition of the present invention is preferably 0.1 to 400 g/10 min, more preferably 1 to 200 g/10 min, and still more preferably 10 to 100 g/10 min from a viewpoint of improving moldability.

The propylene resin composition of the present invention is obtained by melt-kneading the raw material components at preferably 180°C or higher, more preferably 180 to 300°C, still more preferably 180 to 250°C. Examples of the melt-kneading include a Banbury mixer, a single-screw extruder, and a twin-screw co-directional rotary extruder.

Examples of the shape of the propylene resin composition include a strand shape, a sheet shape, a flat plate shape, and a pellet shape obtained by cutting a strand into an appropriate length. In order to mold the resin composition of the present invention, the shape is preferably a pellet shape having a length of 1 to 50 mm from a viewpoint of production stability of an obtained compact.

As the order of kneading the raw material components, the raw material components are preferably blended and kneaded by the following methods.

Method 1: a method for kneading the components (A) to (E) (and the component (F) as desired) at a time
Method 2: a method for kneading the components (A) to (C) and the component (E) (and the component (F) as desired), then adding a masterbatch of the carbon black (D) thereto, and kneading the mixture
Method 3: a method for kneading a part of the component (A) and the carbon black (D) in advance and pelletizing the kneaded product, and kneading the pellet, a part of the component (A), and the components (B), (C), and (E) (and the component (F) as desired) at a time
Method 4: a method for kneading the components (A) to (C) and (E), then adding the component (F) such as a fatty acid amide and the carbon black (D) thereto, and kneading the mixture
Method 5: a method for kneading a part of the component (A), the component (F) such as a fatty acid amide, and the carbon black (D) in advance and pelletizing the kneaded product, and kneading the pellet, a part of the component (A), and the components (B), (C), and (E) at a time

In the propylene resin composition of the present invention, fish eyes (punctiform protrusions or dents) generated on a surface of a compact obtained by molding the resin composition (a film, a sheet, an injection compact, or the like) are preferably less likely to be generated from a viewpoint of enhancing impact resistance of the compact and improving an appearance thereof.

Therefore, when the resin composition is produced in order to suppress generation of fish eyes, the components are preferably caused to pass through a filter after being melt-kneaded. The filter may be a single stage filter or a multistage filter.

A compact obtained by molding the propylene resin composition of the present invention is preferably an injection compact produced by an injection molding method, and at this time, generation of a blue streak is effectively suppressed. Examples of the injection molding method include a general injection molding method, an injection foam molding method, a supercritical injection foam molding method, an ultrahigh-speed injection molding method, an injection compression molding method, an injection press molding method, a gas-assisted injection molding method, a sandwich molding method, a sandwich foam molding method, and an insert outsert molding method.

Examples of the compact include an automobile member, a home appliance member, and a container. Among these, the compact is preferable as an automobile interior member.

EXAMPLES

Hereinafter, the present invention will be described in more detail with reference to Examples and Comparative Examples. Note that the technical scope of the present invention is not limited by these Examples in any sense.

The physical properties and characteristics in Examples and Comparative Examples were evaluated by the following methods.

(1) Melt flow rate (MFR, unit: g/10 min)

The melt flow rate was measured under a load of 2.16 kg according to the method specified in JIS K6758. The MFR of each of the component (A) and the propylene resin composition was measured at a temperature of 230°C, and the MFR of the component (B) was measured at a temperature of 190°C.

(2) Limiting viscosity number (unit: dL/g)

The limiting viscosity number was measured at a temperature of 135°C using tetralin as a solvent by the following method.
A reduced viscosity is measured at three points of concentrations of 0.1 g/dL, 0.2 g/dL, and 0.5 g/dL using an Ubbelohde viscometer. The limiting viscosity number is determined by an extrapolation method in which the reduced viscosity is plotted with respect to the concentration and the concentration is extrapolated to zero. A method for calculating the limiting viscosity number by the extrapolation method is described, for example, on page 491 of "Polymer solution, Polymer Experiment 11" (published by KYORITSU SHUPPAN CO., LTD., 1982).

(3) Measurement and calculation of ratios of polymer (I) and polymer (II) in heterophasic propylene polymer material (A-1) and limiting viscosity numbers ($[\eta]_I$ and $[\eta]_{II}$)

From the limiting viscosity number ($[\eta]_I$) of the polymer (I) obtained in the former-stage polymerization step, actually measured by the above method (2), the limiting viscosity number ($[\eta]_{Total}$) of the final polymer (total of the polymer (I) and the polymer (II)) after the later-stage polymerization step, measured by the above method, and the content (weight ratio) of the polymer (II) contained in the final polymer, the limiting viscosity number ($[\eta]_{II}$) of the polymer (II) polymerized in the later-stage step was calculated and determined by the following formula.

$$[\eta]_{II} = ([\eta]_{Total} - [\eta]_I \times X_I)/X_{II}$$

$[\eta]_{Total}$: limiting viscosity number (dl/g) of final polymer after later-stage polymerization step
$[\eta]_I$: limiting viscosity number (dl/g) of polymer powder taken out from polymerization tank after former-stage polymerization step
$X_I$: weight ratio of component polymerized in former-stage step
$X_{II}$: weight ratio of component polymerized in later-stage step (the sum of $X_I$ and $X_{II}$ is 1)

Here, $X_I$: and $X_{II}$ can be determined from a mass balance at the time of polymerization in each stage.
Note that $X_{II}$ may be determined by measuring a melting heat quantity of the component polymerized in the former-stage step and a melting heat quantity of the final polymer after the later-stage polymerization step, and performing calculation using the following formula.

$$X_{II} = 1 - (\Delta Hf)_{Total}/(\Delta Hf)_I$$

$(\Delta Hf)_{Total}$: melting heat quantity (J/g) of final polymer after later-stage polymerization step
$(\Delta Hf)_I$: melting heat quantity (J/g) of component polymerized in former-stage step

(4) Ethylene content in propylene/ethylene random copolymer

The ethylene content ($(C_{2'})_{II}$) of the ethylene/$\alpha$-olefin copolymer in the propylene polymer composition was determined by measuring the ethylene content ($(C_{2'})_{Total}$) of the whole propylene polymer composition by an infrared absorption spectrum method, and performing calculation with the measurement result and the above $X_{II}$ using the following formula.

$$(C_{2'})_{II} = (C_{2'})_{Total}/X_{II}$$

in which

$(C_{2'})_{Total}$: ethylene content of whole propylene polymer composition (% by mass)

$(C_{2'})_{II}$: ethylene content of ethylene/$\alpha$-olefin copolymer (% by mass)

(5) Carbon black content (unit: parts by weight)

Using TG/DTA-200 manufactured by Seiko Instruments Inc., the carbon black content was measured using a heating loss in a third stage under the analysis conditions presented in Table 1 below.

[Table 1]

| | Atmosphere | Temperature region (°C) | Temperature rising rate (°C/min) | Time (min) |
|---|---|---|---|---|
| First stage | $N_2$ gas | 25 to 600 | 10 | 57.5 |
| Second stage | $N_2$ gas | 600 | 0 | 10 |
| Third stage | Air | 600 to 850 | 10 | 25 |

(6) Evaluation of thermal stability

A press compact prepared by the method described below was carried into a gear oven at 160°C, and a gear oven life (GOL) test was performed. The press compact was taken out every day, and it was confirmed whether or not cracking occurred when the press compact was folded with a finger. When cracking of the press compact occurs by this test, the GOL test of the sample is terminated at this time, and a total time in the oven until this time is referred to as a gear oven life (hereinafter, referred to as GOL, unit: hour). The longer the GOL, the better the thermal stability.

· Production of press compact

A press compact for the thermal stability evaluation was prepared according to the following method.

The propylene resin composition was heated at 230°C for five minutes at normal pressure, subsequently pressurized at 3 MPa at 230°C for five minutes, and further cooled at 5 MPa at normal temperature for five minutes using a hot press machine to obtain a press sheet having a thickness of 1 mm. This sheet was punched with a punching blade to obtain a disk-shaped press compact (test piece) having a diameter of 25 mm and a thickness of 1 mm.

(7) Blue streak defect

· Method for producing compact for evaluating blue streak defect

The propylene resin composition was injection-molded under the following conditions to produce an injection compact for evaluation. The propylene resin composition melted by an injection molding machine was supplied from a gate into a die cavity by the injection molding machine.

• Molding conditions:

Die cavity shape: 100 mm (width) × 150 mm (length) × 3 mm (thickness)
Gate: One gate at center of 100 mm side surface
Cylinder temperature: 220°C
Die temperature: 50°C

• Method for evaluating blue streak defect

According to the above molding conditions, 30 compacts were continuously molded, and the number of the compacts in which a blue streak defect was observed among the 30 compacts was used as a score. When no blue streak defect is confirmed, the score is zero.

Details of the components and the raw materials used in Examples and Comparative Examples are as follows.

(Propylene resin (A))

As the propylene resin (A), the following two types of resins produced by polymerizing a propylene homopolymer in a first polymerization step and polymerizing an ethylene/propylene copolymer in a second polymerization step in the presence of a polymerization catalyst obtained by the method described in Example 1 of JP-A-2004-182981 were used.

(A-1-i) Propylene/(ethylene/propylene) polymer material

A heterophasic propylene polymer material containing 88.0% by weight of the following polymer (I) and 12.0% by weight of the polymer (II), and having a MFR (230°C, load of 2.16 kgf) of 65 g/10 minutes as a whole was used.

· Polymer (I)

Limiting viscosity number ($[\eta]_I$): 0.90 dl/g

· Polymer (II)

Ethylene content: 30% by weight
Limiting viscosity number ($[\eta]_{II}$): 5.1 dl/g

(A-1-ii) Propylene/(ethylene/propylene) polymer material

A heterophasic propylene polymer material containing 86.0% by weight of the following polymer (I) and 14.0% by weight of the polymer (II), and having a MFR (230°C, load of 2.16 kgf) of 63 g/10 minutes as a whole was used.

· Polymer (I)

Limiting viscosity number ($[\eta]_I$): 0.86 dl/g

· Polymer (II)

Ethylene content: 30% by weight
Limiting viscosity number ($[\eta]_{II}$): 5.1 dl/g

(Ethylene/$\alpha$-olefin copolymer (B))

(B-1-i) Ethylene/octene random copolymer

Product name: ENGAGE EG8150 (manufactured by Dow Chemical Japan Co., Ltd.)
Density: 0.868 (g/cm$^3$)
MFR (190°C, load of 21.18 N): 0.5 g/10 min

(B-1-ii) Ethylene/butene random copolymer

Product name: ENGAGE EG7387 (manufactured by Dow Chemical Japan Co., Ltd.)
Density: 0.870 (g/cm$^3$)
MFR (190°C, load of 21.18 N): 0.3 g/10 min

(B-2-i) Ethylene/octene random copolymer

Product name: ENGAGE EG8137 (manufactured by Dow Chemical Japan Co., Ltd.)
Density: 0.870 (g/cm$^3$)
MFR (190°C, load of 21.18 N): 13 g/10 min

(B-2-ii) Ethylene/octene random copolymer

Product name: ENGAGE EG8407 (manufactured by Dow Chemical Japan Co., Ltd.)
Density: 0.870 (g/cm$^3$)
MFR (190°C, load of 21.18 N): 30 g/10 min

(Inorganic filler (C))

Talc

Average particle diameter (laser diffraction method, 50% equivalent particle diameter $D_{50}$): 5.6 $\mu$m

(Carbon black (D))

A pigment masterbatch (D') containing carbon black was used.

(D'-i) Pigment masterbatch

Containing carbon black (D-i) (content: 50%)
pH of carbon black: 7.5

(D'-ii) Pigment masterbatch

Containing carbon black (D-ii) (content: 51%)
pH of carbon black: 7.5

(D'-iii) Pigment masterbatch

Containing carbon black (D-iii) (content: 4.5%)
pH of carbon black: 2.5

(Modified polypropylene (E))

Maleic anhydride-modified PP

Product name: TPPP9112 (manufactured by BYK)

(Lubricant (F))

Erucic acid amide

Product name: NEUTRON-S (manufactured by Nippon Fine Chemical Co., Ltd.)

[Example 1]

[Production of propylene resin composition]

The propylene resin (A), the ethylene/$\alpha$-olefin copolymer (B), and the inorganic filler (C) were blended in the blending ratios presented in Table 2 below (provided that the total amount of the components (A), (B), and (C) is 100% by weight). In addition, with respect to 100 parts by weight of the total amount of the components (A), (B), and (C), the pigment masterbatch (D'-1), the modified PP (E), and the fatty acid amide (F) were blended in the blending ratios (parts by mass) presented in Table 2 (provided that the pigment masterbatch (D'-i) was blended in such an amount that the content of the carbon black (D-i) was the content presented in Table 2). The mixture was kneaded and extruded under vent suction using a twin-screw kneading extruder to produce a resin composition.
The thermal stability and appearance (blue streak defect) of the obtained propylene resin composition were evaluated. Results thereof are presented in Table 2 below.

[Examples 2 and 3 and Comparative Examples 1 and 2]

A propylene resin composition was produced in a similar manner to Example 1 except that the components and the blending amounts of the propylene resin composition were changed to those presented in Table 2 (provided that the pigment masterbatches (D'-ii) and (D'-iii) were blended in such amounts that the contents of the carbon blacks (D-ii) and (D-iii) were the contents presented in Table 2, respectively), and the thermal stability and appearance (blue streak defect) thereof were evaluated. Results thereof are presented in Table 2.

[Table 2]

Table 2

| | | | | Example 1 | Example 2 | Example 3 | Comparative Example 1 | Comparative Example 2 |
|---|---|---|---|---|---|---|---|---|
| Propylene resin (A) | A-1-i | % by weight | | 58 | | | 58.5 | 58 |
| | A-1-ii | % by weight | | | 58.5 | 58.5 | | |
| Ethylene/$\alpha$-olefin copolymer (B) | B-1-i | % by weight | | 5.5 | | | 4.5 | 5.5 |
| | B-1-ii | % by weight | | 12 | 15 | 15 | 15 | 12 |
| | B-2-i | % by weight | | 3.5 | 4.5 | | | 3.5 |
| | B-2-ii | % by weight | | | | 4.5 | | |
| Inorganic filler (C) | C | % by weight | | 21 | 22 | 22 | 22 | 21 |
| Carbon black (D) | D-i | Parts by weight | | 3.0 | 3.0 | 3.0 | | |
| | D-ii | Parts by weight | | | | | 3.1 | |
| | D-iii | Parts by weight | | | | | | 0.3 |
| Modified polypropylene (E) | E | Parts by weight | | 0.5 | 0.5 | 0.5 | | 0.5 |

(continued)

| | | | Example 1 | Example 2 | Example 3 | Comparative Example 1 | Comparative Example 2 |
|---|---|---|---|---|---|---|---|
| Lubricant (F) | F | Parts by weight | 0.4 | 0.4 | 0.4 | 0.4 | 0.4 |
| Thermal stability | GOL | hr | 90 | 195 | 195 | 102 | 19 |
| Appearance (blue streak) | Number of molding defects (N = 30) | Number of pieces | 0 | 0 | 0 | 17 | 0 |

As a reference example, a propylene resin composition for injection molding different from the propylene resin composition of the present invention contains 60% by weight of (A-1-ii), 3% by weight of (B-1-i), 15% by weight of (B-1-ii), and 22% by weight of the inorganic filler (C), and further contains 0.4 parts by weight of the lubricant (F) with respect to 100 parts by weight of the total weight of the components (A-1-ii), (B-1-i), (B-1-ii), and (C).

INDUSTRIAL APPLICABILITY

The propylene resin composition of the present invention has excellent properties such as being capable of producing an injection compact having a favorable surface appearance and excellent heat degradation resistance, and thus is particularly preferably used as a material for injection molding. The propylene resin composition is preferably used for applications such as various automobile interior and exterior parts such as an instrument panel, a glove box, trims, housings, a pillar, a bumper, a fender, and a backdoor, as well as various parts of home appliances, various housing equipment parts, various industrial parts, and various building material parts. The propylene resin composition has high applicability in various industry fields such as transportation machinery industry, electrical and electronic industry, and building and construction industry.

**Claims**

1. A propylene resin composition comprising:

   a propylene resin (A) containing a heterophasic propylene polymer material (A-1) containing a polymer (I) containing 80% by mass or more of monomer units derived from propylene (provided that a total mass of the polymer (I) is 100% by mass) and a polymer (II) containing monomer units derived from at least one $\alpha$-olefin selected from the group consisting of ethylene and $\alpha$-olefins each having 4 or more and 12 or less carbon atoms and monomer units derived from propylene;
   an ethylene/$\alpha$-olefin copolymer (B) containing an ethylene/$\alpha$-olefin copolymer (B-1) having a melt flow rate (190°C, load of 2.16 kgf, in accordance with JIS-K-7210) of 0.8 g/10 min or less and an ethylene/$\alpha$-olefin copolymer (B-2) having a melt flow rate (190°C, load of 2.16 kgf, in accordance with JIS-K-7210) of 10 g/10 min or more;
   an inorganic filler (C) other than carbon black;
   carbon black (D) having a pH of higher than 5; and
   a modified polypropylene (E), wherein
   a content of the carbon black (D) is 0.5 parts by weight or more and 5.0 parts by weight or less, and a content of the modified polypropylene (E) is 0.1 parts by weight or more and 1.0 parts by weight or less with respect to 100 parts by weight of a total weight of the propylene resin (A), the ethylene/$\alpha$-olefin copolymer (B), and the inorganic filler (C).

2. The propylene resin composition according to claim 1, wherein a content of the propylene resin (A) is 50% by weight or more and 75% by weight or less, a content of the ethylene/$\alpha$-olefin copolymer (B) is 10% by weight or more and 25% by weight or less, and a content of the inorganic filler (C) is 15% by weight or more and 25% by weight or less with respect to 100% by weight of a total weight of the propylene resin (A), the ethylene/$\alpha$-olefin copolymer (B), and the inorganic filler (C).

3. The propylene resin composition according to claim 1 or 2, wherein
   the ethylene/α-olefin copolymer (B-1) contains:

   an ethylene/1-octene copolymer (B-1-1) having a melt flow rate (190°C, load of 2.16 kgf, in accordance with JIS-K-7210) of 0.8 g/10 min or less; and
   an ethylene/1-butene copolymer (B-1-2) having a melt flow rate (190°C, load of 2.16 kgf, in accordance with JIS-K-7210) of 0.8 g/10 min or less.

4. The propylene resin composition according to any one of claims 1 to 3, wherein the ethylene/α-olefin copolymer (B-2) contains an ethylene/1-octene copolymer.

5. The propylene resin composition according to any one of claims 1 to 4, further comprising a lubricant (F).

6. The propylene resin composition according to claim 5, wherein the lubricant (F) is at least one selected from the group consisting of a fatty acid amide-based lubricant and a silicone-based lubricant.

7. A compact comprising the propylene resin composition according to any one of claims 1 to 6.

## INTERNATIONAL SEARCH REPORT

International application No.

**PCT/JP2021/027110**

### A. CLASSIFICATION OF SUBJECT MATTER

*C08K 5/20*(2006.01)i; *C08L 23/08*(2006.01)i; *C08L 23/14*(2006.01)i; *C08K 3/013*(2018.01)i; *C08K 3/04*(2006.01)i
FI: C08L23/14; C08L23/08; C08K3/013; C08K3/04; C08K5/20

According to International Patent Classification (IPC) or to both national classification and IPC

### B. FIELDS SEARCHED

Minimum documentation searched (classification system followed by classification symbols)

C08K5/20; C08L23/08; C08L23/14; C08K3/013; C08K3/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2017/110800 A1 (SUMITOMO CHEMICAL CO., LTD.) 29 June 2017 (2017-06-29) claims, example 3, tables 1, 2 | 1-7 |
| Y | JP 2010-537039 A (PRIME POLYMER CO., LTD.) 02 December 2010 (2010-12-02) claims 1, 9, paragraphs [0016]-[0019], [0033], examples | 1-7 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 September 2021** | **28 September 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/027110**

| Patent document cited in search report | | | Publication date (day/month/year) | Patent family member(s) | | | Publication date (day/month/year) |
|---|---|---|---|---|---|---|---|
| WO | 2017/110800 | A1 | 29 June 2017 | US | 2019/0002679 | A1 | |
| | | | | claims, example 3, tables 1, 2 | | | |
| | | | | EP | 3395884 | A1 | |
| | | | | CN | 108368315 | A | |
| JP | 2010-537039 | A | 02 December 2010 | WO | 2009/042643 | A1 | |
| | | | | claims 1, 9, page 5, line 19 to page 7, line 6, page 11, lines 3-8, examples | | | |
| | | | | US | 2010/0210780 | A1 | |
| | | | | EP | 2197947 | A1 | |
| | | | | MX | 2010003446 | A | |
| | | | | CN | 101809076 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014034614 A
- JP 61218606 A
- JP 5194685 A
- JP 7216017 A
- JP 9316147 A
- JP 10212319 A
- JP 2004182981 A
- JP 55075410 A
- JP 2565753 B

**Non-patent literature cited in the description**

- Polymer solution, Polymer Experiment 11. KYORIT-SU SHUPPAN CO., LTD, 1982
- Polymer solution, Polymer Experiment. KYORITSU SHUPPAN CO., LTD, 1982, vol. 11, 491